# EUROPEAN PATENT APPLICATION

(11) **EP 2 326 076 A1**
(43) Date of publication of application: **25.05.2011**
(21) Application number: 10166523.0
(22) Date of filing: 18.06.2010
(51) Int. Cl.: H04N 5/00, H04N 7/24

(54) **Display apparatus and control method thereof**

(30) Priority: 23.11.2009 KR 20090113576
(71) Applicant: Samsung Electronics Co., Ltd., Suwon-si, Gyeonggi-do (KR)
(72) Inventor: Kim, Geon-ho, Gyeonggi-do (KR); Woo, Chung-ki, Gyeonggi-do (KR)
(74) Representative: Hewett, Jonathan Michael Richard

(57) **Abstract**

A display apparatus is provided, including: a signal processing unit which comprises at least one device, and processes a received image signal to display an image; a volatile memory unit which comprises a first memory area allotted to an application for displaying the image and a second memory area that is different from the first memory area; and a control unit which allots the second memory area to the at least one device if the application is not updated, and allots at least a part of the second memory area for updating the application if the application is updated.

## Description

The present invention relates to a display apparatus and a control method thereof, and more particularly, to updating a compression file system by a file unit or by a part of a file under an embedded environment having a low capacity memory.

There are generally three ways to update an application. First, there is updating an application by a partition unit of a flash memory or a hard disk drive (HDD). Second, there is updating an application by a file unit. Third, there is comparing a binary file and then updating only difference.

In the case of updating by a partition unit, the updating speed is slow because all partition should be updated. In the case of updating by a file unit or a binary, the updating speed is fast. However, to use this method, the file system should be a read/write (R/W) file system.

To update a read/only (R/O) file system, a sufficient memory space is necessary to decompress an image of a compressed file system. Accordingly, in a low specification digital television (DTV) using the R/O file system, a memory space becomes insufficient for updating an application.

Accordingly, an aspect of the present invention provides an apparatus and a method for updating a compression file system by a file unit or by a part of a file under an embedded environment in which there is insufficient memory.

The foregoing and/or other aspects may be achieved by providing a display apparatus, including: a signal processing unit which comprises at least one device, and processes a received image signal to display an image; a volatile memory unit which comprises a first memory area allotted to correspond to an application for a display of the image and a second memory area different from the first memory area; and a control unit which allots the second memory area to correspond to the at least one device if not updating the application, and allots at least a part of the second memory area for an update of the application if updating the application. The control unit may allot at least a part of the first memory area for an update of the application.

The control unit may update the application by a file unit.

The control unit may update the application by a binary update type.

Update data of the application may be a compression file type.

The control unit may allot the second memory area for an update of the application after rebooting the display apparatus to initialize the volatile memory unit.

The signal processing unit may receive update data of the application by at least one of an over the air (OTA) update type and an over the network (OTN) update type.

The control unit may control the signal processing unit to display an update proceeding status of the application by at least one of a graphic user interface and an on screen display (OSD).

According to another aspect of the present invention, there is provided a control method of a display apparatus, including: determining whether to execute an update of an application; allotting a first memory area to correspond to an application for a display of an image; and allotting a second memory area different from the first memory area to correspond to the at least one device if not updating the application, and allotting at least a part of the second memory area for an update of the application if updating the application.

The control method of the display apparatus may include allotting at least a part of the first memory area for an update of the application.

The control method of the display apparatus may include updating the application by a file unit.

The control method of the display apparatus may include updating the application by a binary update type.

The control method of the display apparatus may include update data of the application that is a compression file type.

The control method of the display apparatus may include allotting the second memory area for an update of the application after rebooting the display apparatus.

The control method of the display apparatus may include receiving update data of the application by at least one of an over the air (OTA) update type and an over the network (OTN) update type.

The control method of the display apparatus may include displaying an update proceeding status of the application by at least one of a graphic user interface and an on screen display (OSD).

According to a further aspect of the present invention, there is provided a display apparatus, including: a signal processing unit which comprises at least one device, and processes a received image signal to display an image; a volatile memory unit which comprises a first memory area allotted to correspond to an application for a display of the image, and a second memory area allotted to correspond to the at least one device; and a control unit which selectively allots the first memory area and the second memory area to correspond to whether to execute an update of the application.

The control unit may allot the first memory area and the second memory area depending on a memory map determined to correspond to whether to execute an update of the application.

The memory map may include at least one of the capacity and the position of the first memory area and the second memory area.

The control unit may allot the first memory area and the second memory area after rebooting the display apparatus to initialize the volatile memory unit.

The control unit may execute a first application for an update of the application.

The size of the first application may be smaller than the size of a second application executed if not executing an update of the application.

The size of the first memory area allotted if executing an update of the application may be bigger than the size of the first memory area allotted if not executing an update of the application.

The size of the second memory area allotted if executing an update of the application may be smaller than the size of the second memory area allotted if not executing an update of the application.

According to a further aspect of the present invention, there is provided a control method of a display apparatus which comprises at least one device, the control method of the display apparatus including: determining whether to execute an update of an application; and selectively allotting a first memory area corresponding to an application for a display of an image and a second memory area corresponding to the at least one device to correspond to whether to execute an update of the application.

The control method of the display apparatus may include allotting the first memory area and the second memory area depending on a memory map determined to correspond to whether to execute an update of the application.

The memory map may include at least one of the capacity and the position of the first memory area and the second memory area.

The control method of the display apparatus may include allotting the first memory area and the second memory area after rebooting the display apparatus to initialize a volatile memory unit.

The control method of the display apparatus may include executing a first application for an update of the application.

The size of the first application may be smaller than the size of a second application executed if not executing an update of the application.

The size of the first memory area allotted if executing an update of the application may be bigger than the size of the first memory area allotted if not executing an update of the application.

The size of the second memory area allotted if executing an update of the application may be smaller than the size of the second memory area allotted if not executing an update of the application.

The above and/or other aspects will become apparent and more readily appreciated from the following description of the exemplary embodiments, taken in conjunction with the accompanying drawings, in which:
FIG. 1 is a block diagram illustrating a configuration of a display apparatus according to an exemplary embodiment;
FIG. 2 illustrates a memory area allotted according to an exemplary embodiment;
FIG. 3 illustrates a memory area allotted according to another exemplary embodiment;
FIG. 4 illustrates a memory allotting process according to an exemplary embodiment;
FIG. 5 illustrates an updating process of an application according to an exemplary embodiment supplies;
FIG. 6 illustrates a graphic user interface related to an updating proceeding status according to an exemplary embodiment;
FIGs. 7A and 7B respectively illustrate a memory area allotted according to still another exemplary embodiment; and
FIG. 8 illustrates a memory allotting process according to another exemplary embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

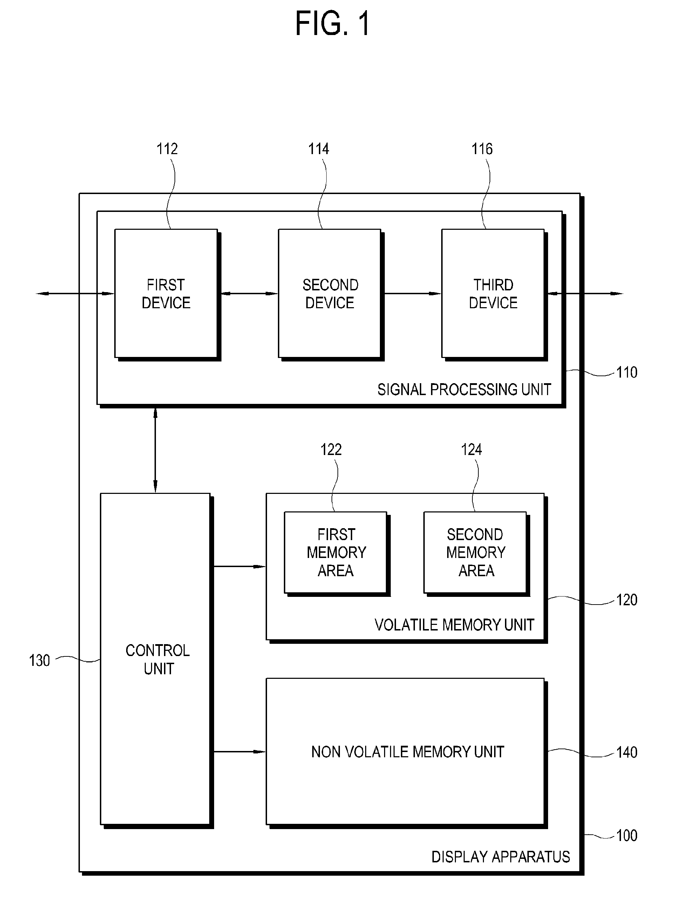

FIG. 1 is a block diagram illustrating a configuration of a display apparatus according to an exemplary embodiment.

A display apparatus 100 according to the present exemplary embodiment may be a TV, a set top box, a digital versatile disk (DVD) player, a mobile terminal, a desk top personal computer (PC), a laptop PC, etc. Furthermore, the display apparatus 100 according to the present exemplary embodiment may be embodied by an electronic device as long as it is capable of updating an application.

The display apparatus 100 according to the present exemplary embodiment may include a signal processing unit 110, a volatile memory unit 120, a control unit 130 and a non volatile memory unit 140.

The signal processing unit 110 includes at least one of a first device 112, a second device 114. and a third device 116, and processes a received image signal to display an image. In Fig. 1, the signal processing unit 110 includes the first device 112, the second device 114 and the third device 116.

The first device 112 is capable of transmitting and receiving data. In detail, the first device 112 may receive a broadcasting signal transmitted from a broadcasting station, or may perform a communication with a server through wire and wireless networks to receive data. Also, the first device 112 may perform a blue-tooth communication, a zigbee communication, a local area network (LAN) communication, etc. with a neighboring surrounding apparatus. In this case, the first device 112 may receive update data of an application, an image signal, etc. The update data of the application may be a compression file type.

According to the present exemplary embodiment, the first device 112 may receive update data of an application through a broadcasting signal, or may receive an update data of an application by a communication through a network. In this case, the control unit 130 may update an application by at least one of an over the air (OTA) update type and an over the network (OTN) update type. The OTA update type is a method of updating an application through a ground wave signal. Also, the OTN type is a method of updating an application through a network communication.

The second device 114 is capable of processing a signal transmitted and received by the first device 112. In this case, the second device 114 may perform encoding, decoding, demodulating, image processing, etc. of a signal.

The third device 116 is capable of displaying an image based on a signal processed by the second device 114. For this, the third device 116 may include a display panel (not shown) embodied by a liquid crystal display (LCD), an organic light emitting display (OLED), a plasma display panel (PDP), etc., and a panel driving unit (not shown) driving the display panel.

The volatile memory unit 120 is a memory in which stored data is erased if a power supplying is suspended, and may be embodied by a static random access memory (SRAM), a dynamic random access memory (DRAM), etc. The volatile memory unit 120 is capable of reading and writing data.

The volatile memory unit 120 may include a first memory area 122 and a second memory area 124. The first memory area 122 may be an area allotted to correspond to an application for displaying an image. In detail, the first memory area 122 may be a system memory. In case of a Linux system, the first memory area 122 may include a stack area, a heap area, a data area, a text area, etc.

The second memory area 124 is a different area from the first memory area 122. In this case, the second memory area 124 may be allotted to correspond to at least one device or may be allotted for an update of an application depending on whether an application is to be updated. In detail, the second memory area 124 may be a hardware memory. In case of a Linux system, the second memory area 124 may include a hardware memory area.

The control unit 130 may allot the second memory area 124 to correspond to at least one of the first device 112, the second device 114, and the third device 116, if not updating an application, and may allot at least a part of the second memory area 124 for an application update if updating an application. In this case, the control unit 130 may allot the second memory area 124 for an application update after rebooting the display apparatus 100 to initialize the volatile memory unit 120.

The control unit 130 may allot at least a part of the first memory area 122 for an application update.

The control unit 130 may update an application in various ways. According to an exemplary embodiment, the control unit 130 may update an application by a file unit. According to another exemplary embodiment, the control unit 130 may update an application using a binary update. That is, a binary file of a stored application and a binary file of an application to be updated are compared to extract the differences between the files, and then only the differences may be updated. According to still another exemplary embodiment, the control unit 130 may update an application by a partition unit of a flash memory or a hard disk drive (HDD).

Also, the control unit 130 may control the signal processing unit 110 to display an update proceeding status of an application in at least one of a graphic user interface and an on screen display (OSD).

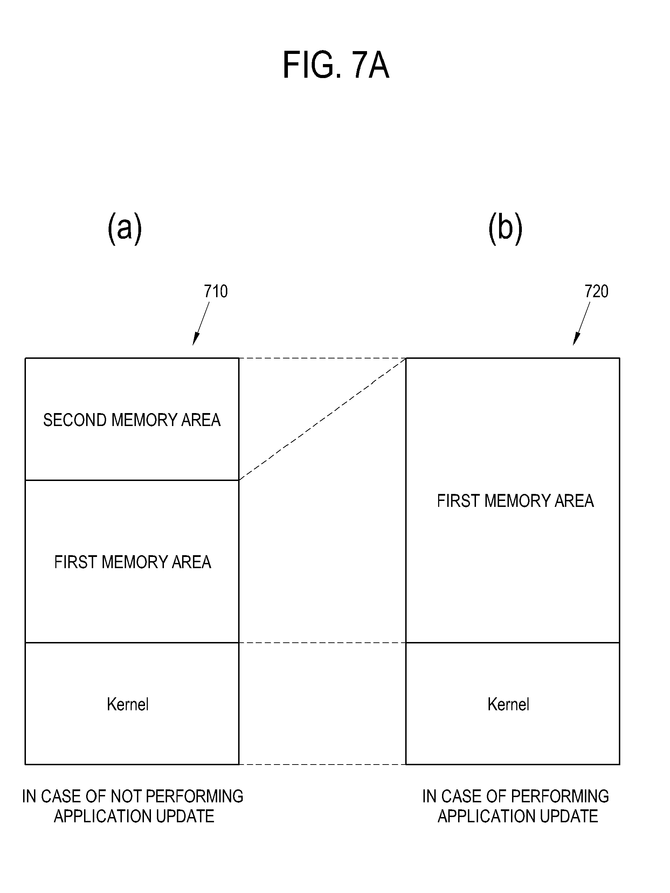

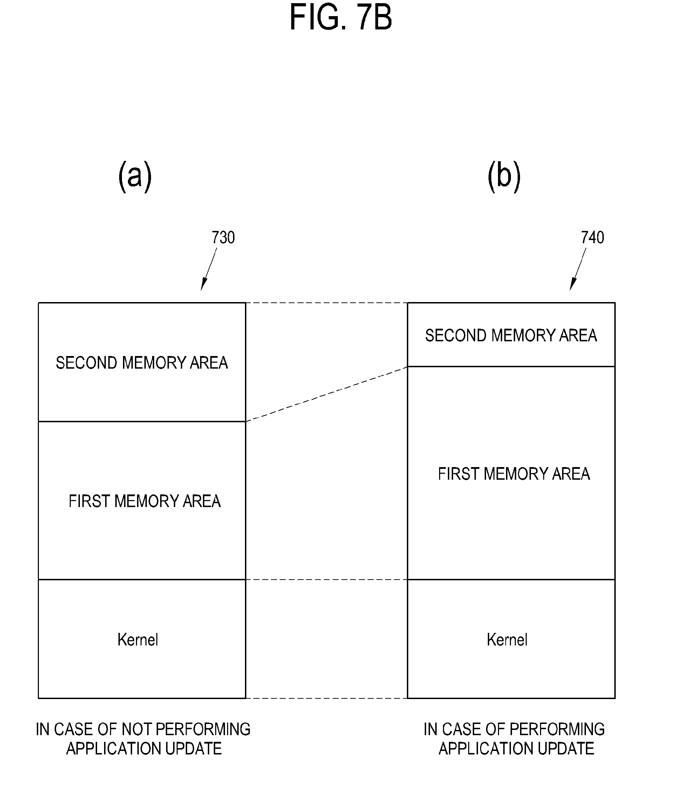

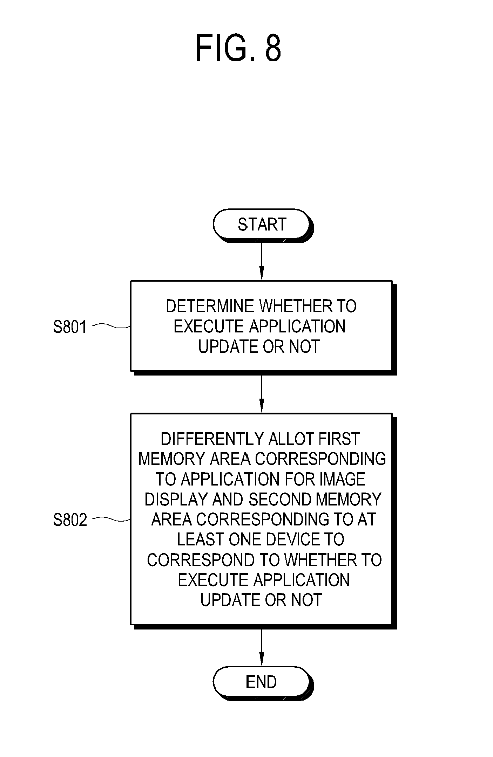

According to another exemplary embodiment, the control unit 130 may have two memory maps corresponding to the case of updating an application and the case of not updating an application, respectively, and may allot a memory by a corresponding memory map in booting depending on each case. This will be described later by referring to FIGs. 7A, 7B and 8.

The non volatile memory unit 140 is a memory in which stored data is not erased although a power supplying is blocked, and may be embodied by a flash memory, a ferroelectric random access memory (FRAM), a phase-change random access memory (PRAM), etc.

An update data of an application may be stored in the non volatile memory unit 140.

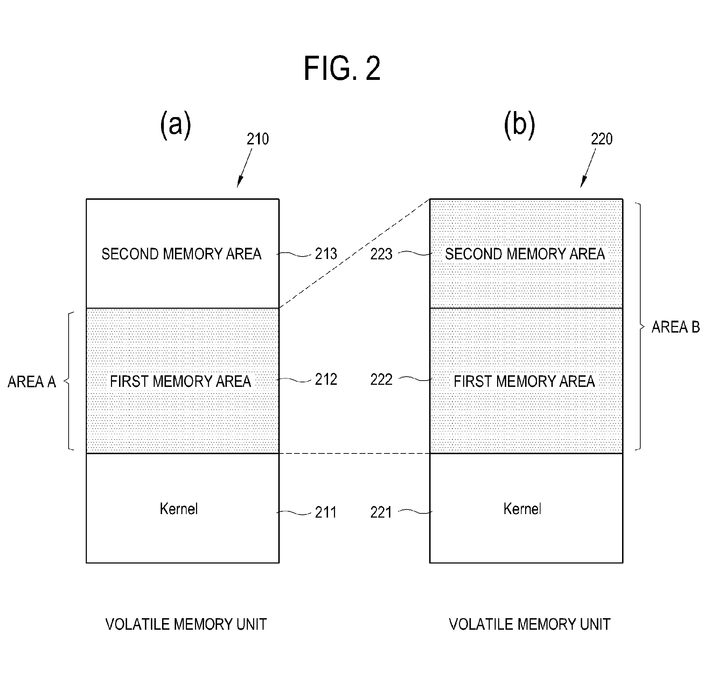

FIG. 2 illustrates a memory area allotted according to an exemplary embodiment.

According to the exemplary embodiment, the second memory area is selectively allotted depending on whether an application is updated.

Example (a) illustrated on the left side of FIG. 2, illustrates a volatile memory unit 210 when an update of an application is not performed, and example (b) illustrated on the right side of FIG. 2 illustrates a volatile memory unit 220 when an update of an application is performed.

Kernel areas 211 and 221 are allotted to execute an operating system totally controlling a system.

First memory areas 212 and 222 are allotted to correspond to an application for displaying an image. In this case, the control unit 130 may execute an application or may update an application by using the first memory areas 212 and 222.

The second memory areas 213 and 223 may be allotted to correspond to at least one of the first device 112, the second device 114, and the third device 116, or may be allotted for an application update depending on whether an application is updated.

In detail, in the case of the example (a) illustrated on the left side of FIG. 2, the second memory area 213 is allotted to correspond to at least one device. In this case, the second memory area 213 becomes an area that a plurality of devices use to operate. For example, a tuner may use the second memory area 213 to tune a broadcasting signal, or a panel driving unit may use the second memory area 213 to drive a display panel. Accordingly, the control unit 130 may use only Area A, that is, the first memory area 212 for updating an application.

In the case of the example (b) illustrated on the right side of FIG. 2, the second memory area 223 is allotted for updating an application. That is, the second memory area 223 becomes an area to be used to update an application. For example, the second memory area 223 may be used to read or write an update data of an application of a read only (R/O) type. Accordingly, the control unit 130 may use Area B, that is, all of the first memory area 222 and the second memory areas 223 for an update of an application. Accordingly, a memory capacity available for an application update can be increased in comparison to the case of the volatile memory unit (a) illustrated on the left side of FIG. 2.

If an application update is performed under the state that an area is allotted as shown in the example (a) illustrated on the left side of FIG. 2, the control unit 130 may perform the update of the application by using Area A, that is, only the first memory area 212. That is, since the second memory area 213 is an area which a device exclusively uses, the second memory area 213 is not used for updating an application. If updating a file system of an R/O type, a sufficient memory space is necessary to decompress a compressed file system image, and accordingly, there may be insufficient memory space to update the file system. In the related art, since an application is updated under the state that an area is allotted as shown in the example (a) illustrated on the left side of FIG. 2, there may be insufficient memory space to update the application.

In case of a TV, if it is converted into an application update mode, the TV does not operate an original function. Accordingly, a memory which a hardware uses and a memory which an application performed by the TV uses are not used in updating an application. Accordingly, in the present exemplary embodiment, in updating an application, an unused surplus memory is used for updating the application. Accordingly, a memory space insufficiency associated with updating can be avoided.

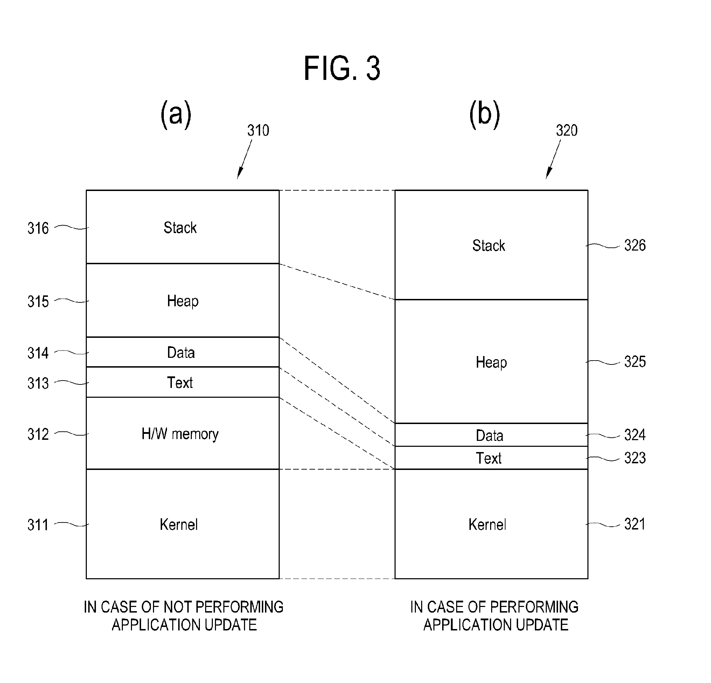

FIG. 3 illustrates a memory area allotted according to another exemplary embodiment.

In FIG. 3, it is assumed that an operating system (OS) is a Linux OS. Also, example (a) illustrated on the left side of FIG. 3 illustrates a volatile memory unit 310 when an application update is not performed, and example (b) illustrated on the right side of FIG. 3 illustrates a volatile memory unit 320 when an application update is performed.

The kernel areas 311 and 321 are a core of the Linux OS, and undertake a management of a processor residing in the volatile memory unit 310 and 320, an input and output management, a file management, a communication between processors, an entire H/W management, etc.

An H/W memory area 312 is a memory that a hardware element uses to operate. That is, the H/W memory area 312 undertakes an operation of at least one device.

Text areas 313 and 323 and data areas 314 and 324 store application data, application update data, etc. For example, application update data may be stored as an image type. In the text areas 313 and 323, a program code, that is, machine commands performed by a central processing unit (CPU) is stored. Also, in the data areas 314 and 324, an entire region variable and a static variable are allotted simultaneously as soon as an application starts, and are extinguished from a memory only if an application is ended.

In heap areas 315 and 325 and stack areas 316 and 326, a read application data, a read application update data, etc. are stored. The heap areas 315 and 325 and the stack areas 316 and 326 are memories capable of being used in a run time. The heap areas 315 and 325 are areas for which a memory is dynamically allotted, and are allotted and withdrawn by a user. The stack areas 316 and 326 are areas for which a memory is statically allotted, and store a local variable and an intermediating variable. A variable allotted to the stack areas 316 and 326 disappears if a function calling is completed.

If an update of an application is not performed, the volatile memory unit 310 is allotted to have areas as shown in the example (a) illustrated on the left side of FIG. 3. That is, the display apparatus 100 performs an original function. Accordingly, a hardware memory for an operation of the device, that is, an H/W memory area 312 is allotted. Also, to execute an application of the display apparatus 100, the text area 313, the data area 314, the heap area 315, the stack area 316, etc. are allotted.

If an update of an application is performed, the volatile memory unit 320 is allotted as shown in the example (b) illustrated on the right side of FIG. 3. That is, in this case, the display apparatus 100 does not perform the original function. Accordingly, the H/W memory 312 which the hardware uses and a memory which an application performed by the display apparatus 100 uses are not necessary. Referring to the example (b) illustrated right, the H/W memory 312 is not allotted. Also, since an application of the display apparatus 100 (for example, an image display, etc.) is not executed, the text area 323 and the data area 324 are relatively reduced. In this case, a memory not used is further allotted to the heap area 325 and the stack area 326.

In comparison with the example (a) illustrated on the left side of FIG. 3, in the case of the example (b) illustrated on the right side of FIG. 3, the heap area 325 and the stack area 326 are increased. Accordingly, a memory space necessary to read and write an update data of an application of an R/O type can be further obtained.

In a general embedded system, an application is updated under the state that a volatile memory is allotted as shown in the example (a). As a code or data of an application increases, the heap area 315 and the stack area 316 which are memories available in a run time decrease. An embedded system having a low specification tightly uses a DRAM and a flash memory to reduce cost. If a file system of a compression type is updated under this environment, there may be insufficient memory space to complete the update.

According to the present exemplary embodiment, in the case of performing an application update, a hardware memory is allotted to a system memory. That is, a system uses all memory which a hardware exclusively uses. Accordingly, although a compression file system is updated under the environment in which a DRAM and a flash memory are insufficient, a specific file which exists in a compressed image can be updated by a file unit, or a part (difference) of a file can be updated.

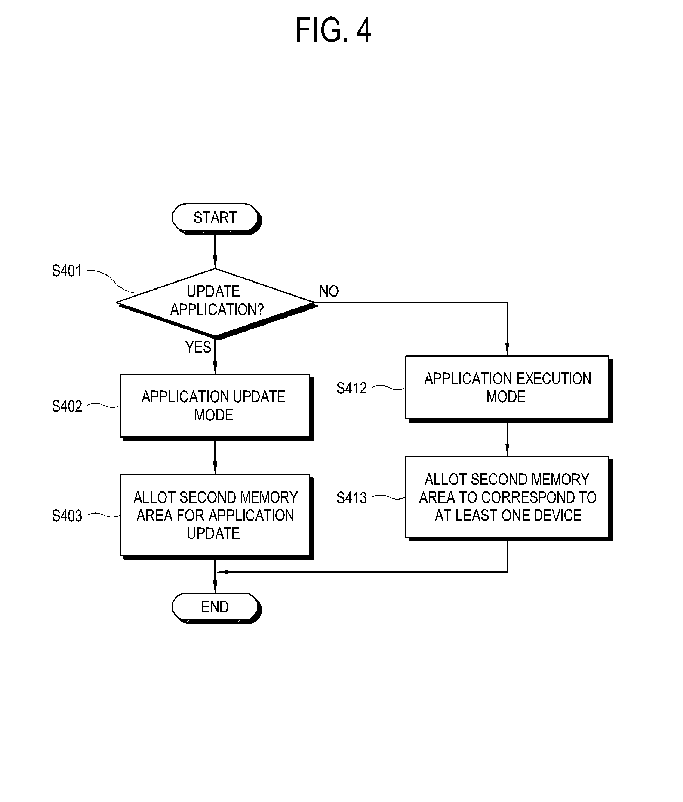

FIG. 4 illustrates a memory allotting process according to an exemplary embodiment.

The display apparatus 100 determines whether to update an application (S401).

According to an exemplary embodiment, the display apparatus 100 may output a graphic user interface (GUI) requesting whether the user wishes to perform an application update. If the user selects an update, the display apparatus 100 starts the application update. According to anther exemplary embodiment, if update data of an application is received, the display apparatus 100 may automatically perform an update.

In case of an application update mode (S402), the display apparatus 100 allots a second memory area for an update of an application (S403). In detail, the second memory area can be used as a system memory.

In case of an application execution mode (S412), the display apparatus 100 allots the second memory area to correspond to at least one device (S413). In detail, the second memory area can be used as a hardware memory.

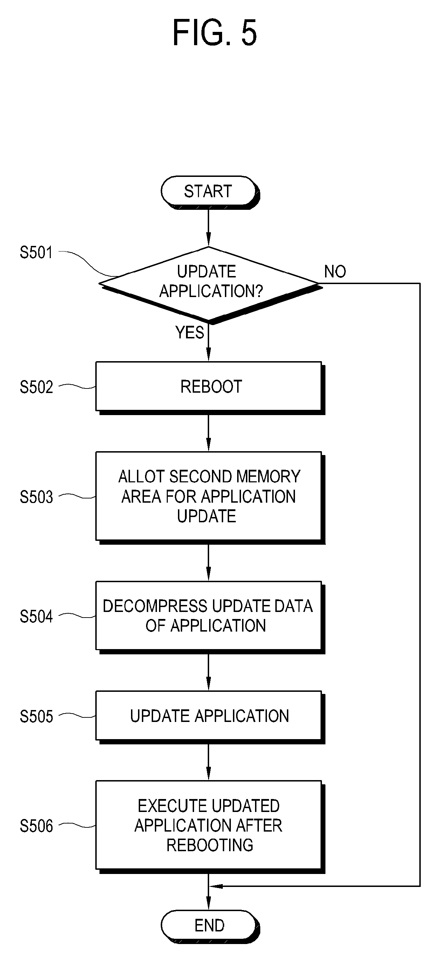

FIG. 5 illustrates an updating process of an application according to an exemplary embodiment.

The display apparatus 100 determines whether to update an application (S501). In case of not updating an application (S501-N), the display apparatus 100 ends the process in FIG. 5.

In case of updating an application (S501-Y), the display apparatus 100 reboots the system (S502). According to an exemplary embodiment, the display apparatus 100 may store a file image to be updated in a non volatile memory unit, and may set a flag indicating whether to update. For example, setting the flag as '1' may indicate the case of performing an update, and setting the flag as '0' may indicate the case of not performing an update. The flag becomes an index related to whether to perform an update if the system is newly started by a rebooting. The display apparatus 100 sets the flag, and then reboots the system.

By the rebooting of the display apparatus 100, a volatile memory unit is initialized. In this case, the display apparatus 100 checks whether the flag is set or not.

The display apparatus 100 allots the second memory area for an application update (S503). In this case, the volatile memory unit may be used as shown in example (b) illustrated on the right side of FIG. 2

The display apparatus 100 decompresses update data of an application (S504). For example, a compression image (cramfs, squashfs, etc.) which is an update target may be decompressed in the volatile memory unit.

The display apparatus 100 updates an application (S505). In detail, the update may be performed by using an update image previously stored in the volatile memory unit. According to an exemplary embodiment, the display apparatus 100 may update an application by a file unit. According to another exemplary embodiment, the display apparatus 100 may update an application by a binary update type. That is, a binary file of a stored application and a binary file of an application to be updated are compared to extract any differences, and then only the differences may be updated. According to still another exemplary embodiment, the display apparatus 100 may update an application by a partition unit of a flash memory or a hard disk drive (HDD).

After rebooting, the display apparatus 100 executes an updated application (S506). In detail, the display apparatus 100 may be booted by the updated application, or the updated application may be executed after booting. In this case, the volatile memory unit may be used as shown in example (a) illustrated on the left side of FIG. 2.

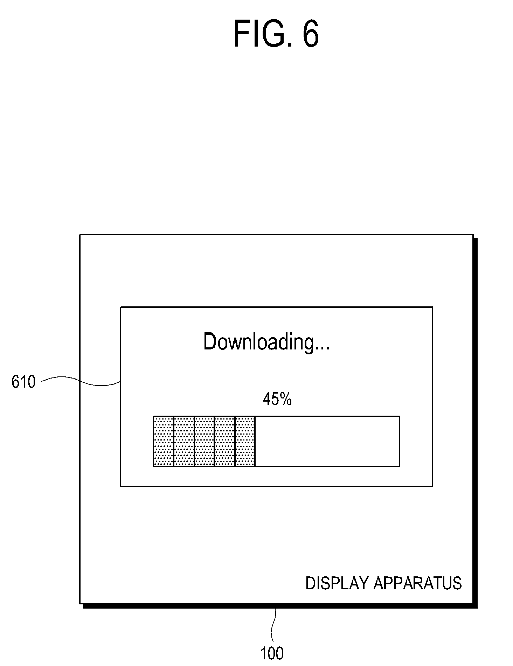

FIG. 6 illustrates a graphic user interface related to an updating proceeding status according to an exemplary embodiment.

As shown in FIG. 6, the display apparatus 100 may output a GUI 610 related to an update proceeding state. In this case, an application for displaying a GUI is an application having a small capacity, and is not an application which the display apparatus 100 executes to perform an original function. Accordingly, although an application for displaying the GUI is executed, it does not occupy a heap area and a stack area largely, and a surplus space can be used for updating an application.

FIGs. 7A and 7B respectively illustrate a memory area allotted according to still another exemplary embodiment.

According to still another exemplary embodiment, the control unit 130 may selectively allot a first memory area and a second memory area depending on whether to execute an application update.

The first memory area is an area allotted to correspond to an application for a display of an image. In this case, the size of the first memory area allotted in case of executing an update of an application is bigger than that of the first memory area allotted in case of not executing an update of an application.

The second memory area is an area allotted to correspond to at least one device. In this case, the size of the second memory area allotted in case of executing an update of an application is smaller than that of the second memory area allotted in case of not executing an update of an application.

The control unit 130 may allot the first memory area and the second memory area depending on a memory map determined to correspond to whether to execute an update of an application. In this case, the memory map may include at least one of the capacity and the position of the first memory area and the second memory area.

The control unit 130 may execute a first application for an update of an application. The size of the first application is smaller than that of a second application executed if not executing an update of an application.

The type of an allotted memory area may vary depending on whether to perform an update of an application or not. That is, referring to FIG. 7A, the second memory area is allotted to a volatile memory unit 710 illustrated in example (a) on the left side of FIG. 7A, but the second memory area is not allotted to a volatile memory unit 720 illustrated in example (b) on the right side of FIG. 7A.

The size of an allotted memory area may vary depending on whether to perform an application update. That is, referring to FIG. 7B, the first memory area of a volatile memory unit 730 illustrated in example (a) on the left side of FIG. 7B is smaller than the first memory area of a volatile memory unit 740 illustrated in example (b) on the right side of FIG. 7B. Also, the second memory area of the volatile memory unit 730 illustrated in example (a) is bigger than the second memory area of the volatile memory unit 740 illustrated in example (b) in FIG. 7B.

FIG. 8 illustrates a memory allotting process according to another exemplary embodiment.

The display apparatus 100 determines whether to execute an update of an application or not (S801).

Depending on whether an application update is executed, the display apparatus 100 selectively allots a first memory area corresponding to an application for a display of an image and a second memory area corresponding to at least one device (S802).

As described above, according to the present exemplary embodiments, a compression file system can be updated by a file unit or a part of a file can be updated under an embedded environment in which a memory is insufficient.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus, comprising:
a signal processing unit which comprises at least one device, and processes a received image signal to display an image;
a volatile memory unit which comprises a first memory area allotted to an application for displaying the image and a second memory area that is different from the first memory area; and
a control unit which allots the second memory area to the at least one device if not updating the application, and allots at least a part of the second memory area for an update of the application if updating the application.

2. The display apparatus according to claim 1, wherein the control unit allots at least a part of the first memory area for an update of the application.

3. The display apparatus according to claim 1, wherein the control unit updates the application by a file unit.

4. The display apparatus according to claim 1, wherein the control unit updates the application by a binary update type.

5. The display apparatus according to claim 1, wherein the control unit updates the application using update data of the application that is a compression file type.

6. The display apparatus according to claim 1, wherein the control unit allots the second memory area for an update of the application after rebooting the display apparatus to initialize the volatile memory unit.

7. A control method of a display apparatus, comprising:
determining whether to execute an update of an application or not;
allotting a first memory area to an application for displaying an image; and
allotting a second memory area that is different from the first memory area to the at least one device if not updating the application, and allotting at least a part of the second memory area for an update of the application if updating the application.

8. A display apparatus, comprising:
a signal processing unit which comprises at least one device, and processes a received image signal to display an image;
a volatile memory unit which comprises a first memory area allotted to an application for displaying the image, and a second memory area allotted to the at least one device; and
a control unit which selectively allots the first memory area and the second memory area to correspond to whether to execute an update of the application or not.

9. The display apparatus according to claim 8, wherein the control unit allots the first memory area and the second memory area depending on a memory map that correspond to whether the application is updated.

10. The display apparatus according to claim 8, wherein the control unit allots the first memory area and the second memory area after rebooting the display apparatus to initialize the volatile memory unit.

11. The display apparatus according to claim 8, wherein the control unit executes a first application for an update of the application.

12. The display apparatus according to claim 11, wherein the size of the first application is smaller than the size of a second application that is executed if not executing an update of the application.

13. The display apparatus according to claim 8, wherein the size of the first memory area allotted if executing an update of the application is bigger than the size of the first memory area allotted if not executing an update of the application.

14. The display apparatus according to claim 8, wherein the size of the second memory area allotted if executing an update of the application is smaller than the size of the second memory area allotted if not executing an update of the application.

15. A control method of a display apparatus which comprises at least one device, the control method of the display apparatus comprising:
determining whether to execute an update of an application or not; and
selectively allotting a first memory area to an application for displaying an image and a second memory area to the at least one device to correspond to whether to execute an update of the application or not.
